# EUROPÄISCHE PATENTSCHRIFT

(11) **EP 2 195 559 B1**
(45) Veröffentlichungstag und Bekanntmachung des Hinweises auf die Patenterteilung: **22.11.2017**
(21) Anmeldenummer: 08804948.1
(22) Anmeldetag: 01.10.2008
(51) Int. Cl.: F16H 61/30

(54) **SCHALTVORRICHTUNG MIT SERVOUNTERSTÜTZUNGSEINRICHTUNG**
SHIFTING APPARATUS WITH POWER ASSISTANCE DEVICE
DISPOSITIF DE CHANGEMENT DE VITESSES À SYSTÈME DE SERVO-ASSISTANCE

(30) Priorität: 09.10.2007 DE 102007048401
(43) Veröffentlichungstag der Anmeldung: 16.06.2010
(73) Patentinhaber: ZF Friedrichshafen AG, 88046 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2008/063124
(87) Internationale Veröffentlichungsnummer: WO 2009/047180

(56) Entgegenhaltungen:
- EP-A- 1 630 460
- WO-A-2008/028822
- DE-A1-102006 006 651

## Beschreibung

Die Erfindung betrifft eine Schaltvorrichtung mit Servounterstützungseinrichtung nach der im Oberbegriff von Anspruch 1 näher definierten Art.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Es sind pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend.

Die DE 10 2004 041 543 A1 offenbart eine Schaltvorrichtung mit Servounterstützungseinrichtung für ein Getriebe eines Kraftfahrzeugs, welche eine zentrale Schaltwelle umfasst, deren axiale Verschiebung in einer Wählbewegung und deren Drehbewegung in einer Schaltbewegung resultiert. Bei einer Drehbewegung der zentralen Schaltwelle wird über Stifte zur Übertragung der Handschaltkraft und einen mit den Stiften in Wirkverbindung stehenden Hebel ein Steuerventil der Servounterstützungseinrichtung aktiviert. Die Stifte zur Übertragung der handschaltkraft greifen in Längsnuten im Umfang der Schaltwelle ein und sind derart in den Längsnuten angeordnet, dass eine axiale Verschiebung der Schaltwelle ermöglicht wird. Zur Überbrückung der Servounterstützungseinrichtung in bestimmten Gängen sind an den Längsnuten entsprechende Quernuten vorgesehen.

Aus der DE 10 2006 006 651 A1 ist eine gattungsgemäße Schaltvorrichtung mit einer Servounterstützungseinrichtung für ein Getriebe eines Fahrzeugs bekannt geworden, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind elastische Elemente vorgesehen, um die auf die Servounterstützungseinrichtung einwirkende Handschaltkraft vor der Einleitung in die Servounterstützungseinrichtung zu verändern oder zu begrenzen.

Die DE 10 2006 006 652 A1 offenbart ebenfalls eine Schaltvorrichtung mit einer Servounterstützungseinrichtung für ein Getriebe eines Fahrzeugs, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern.

Der vorliegenden Erfindung liegt die Aufgabe zugrunde, eine Ausführungsform einer Schaltvorrichtung mit Servounterstützungseinrichtung darzustellen, mit welcher eine Vorrichtung zur Begrenzung der Servounterstützungskraft optimiert werden kann.

Die der Erfindung zugrunde liegende Aufgabe wird durch eine, auch die kennzeichnenden Merkmale des Hauptanspruchs aufweisende, gattungsgemäße Schaltvorrichtung mit Servounterstützungseinrichtung gelöst.

Die erfindungsgemäße Schaltvorrichtung mit Servounterstützungseinrichtung, insbesondere für Getriebe von Nutzfahrzeugen, umfasst ein Schaltgehäuse, Mittel zum Wählen und Schalten einer Gangstufe des Getriebes und eine Übertragungsstelle zur Übertragung der Handschaltkraft auf die Servounterstützungseinrichtung. Die Übertragungsstelle zur Übertragung der Handschaltkraft weist einen Hebel auf, der mit einem Element der Servounterstützungseinrichtung verbunden ist.

Die Schaltvorrichtung weist erfindungsgemäß eine Vorrichtung zur Begrenzung der Servounterstützungskraft auf, welche unmittelbar neben der Übertragungsstelle zur Übertragung der Handschaltkraft auf die Servounterstützungseinrichtung angeordnet ist und einen in der Schaltwelle angeordneten Stift umfasst, der in mindestens eine Nut einer die Schaltwelle umgebenden Hohlwelle eingreift, wobei durch den in die Nut der Hohlwelle eingreifenden Stift eine Begrenzung der Servounterstützungskraft realisierbar ist. Der Stift ist derart in der Schaltwelle angeordnet, dass eine Bewegung der Schaltwelle eine sofortige Bewegung des Stiftes bewirkt. Vorzugsweise ist der Stift spielfrei bzw. mit nur minimalem Spiel in der Schaltwelle angeordnet. Dabei ist die Nut in der Hohlwelle derart ausgebildet, dass unterschiedliche Verdrehspiele zwischen dem Stift, der in der Schaltwelle angeordnet ist und in die Nut der Hohlwelle eingreift, und der Hohlwelle vorherrschen. Die Verdrehspiele können beispielsweise derart ausgebildet sein, dass für jede Gasse bzw. für jede Gangstufe ein anderes Verdrehspiel vorherrscht, wodurch eine unterschiedliche Begrenzung der Servounterstützungskraft für jede Gasse bzw. für jede Gangstufe realisierbar ist.

In einer vorteilhaften Ausführungsform der erfindungsgemäßen Schaltvorrichtung sind die Verdrehspiele bei kleineren Gangstufen größer ausgebildet als bei größeren Gangstufen, wodurch für die kleineren Gangstufen eine größere Servounterstützungskraft zu Verfügung gestellt wird, als für die größeren Gangstufen des Getriebes. Ausgehend von beispielsweise der Gangstufe 3 wird hier unter einer kleineren Gangstufe beispielsweise die Gangstufe 2 und unter einer größeren Gangstufe beispielsweise die Gangstufe 4 verstanden.

In einer weiteren Ausführungsform der erfindungsgemäßen Schaltvorrichtung weist die Hohlwelle im Bereich des Stiftes zur Begrenzung der Servounterstützungskraft eine zweite Nut auf, die in der Hohlwelle um 180 Grad versetzt, also der ersten Nut gegenüberliegend, angeordnet ist. Der Stift zur Begrenzung der Servounterstützungskraft ist hierbei derart ausgebildet und in der Schaltwelle angeordnet, dass er sowohl in die erste als auch in die zweite Nut der Hohlwelle eingreift, wodurch die auftretende Belastung auf die beiden Nuten der Hohlwelle verteilt wird.

In einer bevorzugten Ausführungsform der erfindungsgemäßen Schaltvorrichtung sind die Kontaktflächen von dem Stift zur Begrenzung der Servounterstützungskraft und der Hohlwelle derart ausgebildet, dass bei einem Kontakt von dem Stift mit der Hohlwelle eine optimierte Flächenpressung erzielbar ist.

In einer Ausgestaltung sind die Kontaktflächen von Stift und Hohlwelle konisch zueinander ausgebildet. In einer weiteren vorteilhaften Ausgestaltung ist der Stift zur Begrenzung der Servounterstützungskraft im Bereich der Hohlwelle als abgesetzter Stift ausgebildet, wodurch zwei Anlagepunkte zwischen dem Stift und der Hohlwelle entstehen. Es sind auch andere Ausgestaltungen möglich.

In einer besonders bevorzugten Ausführungsform der erfindungsgemäßen Schaltvorrichtung ist eine axiale Sicherung des Stiftes zur Begrenzung der Servounterstützungskraft entlang seiner Längsachse durch das Schaltgehäuse realisierbar. Es sind auch andere Ausführungsformen möglich, um die axiale Sicherung des Stiftes zu realisieren. Beispielsweise kann der Stift zur Begrenzung der Servounterstützungskraft durch wenigstens einen Sicherungsring und/oder einen Bund am Stift in der Schaltwelle fixiert werden.

In einer bevorzugten Ausführungsform der erfindungsgemäßen Schaltvorrichtung ist das Element, auf das die zu unterstützende Handschaltkraft wirkt, als Steuerstange der Servounterstützungseinrichtung ausgebildet.

Durch die erfindungsgemäße Schaltvorrichtung kann somit eine Begrenzung der Servounterstützungskraft durch eine unmittelbar neben der Übertragungsstelle zur Übertragung der Handschaltkraft auf die Servounterstützungseinrichtung angeordnete Vorrichtung zur Begrenzung der Servounterstützungskraft für jede Gangstufe bzw. jede Gasse realisiert werden. Durch die erfindungsgemäße Anordnung kann das Problem von auftretenden Toleranzen entsprechend klein gehalten werden, wodurch die Verdrehspiele zwischen dem Stift, der in der Schaltwelle angeordnet ist und in die Nut der Hohlwelle eingreift, und der Hohlwelle exakt darstellbar sind und somit die Servounterstützungskraft sehr genau auf den gewünschten Wert begrenzt werden kann.

Im Folgenden wird das Grundprinzip der Erfindung, welche mehrere Ausführungsformen zulässt, an Hand einer Zeichnung beispielhaft näher erläutert.

Es zeigen:
- Fig. 1: eine Schaltanlage nach dem Stand der Technik,
- Fig. 2: eine Schnittdarstellung einer Ausführungsform der erfindungsgemäßen Schaltvorrichtung,
- Fig. 3: eine Draufsicht der erfindungsgemäßen Schaltvorrichtung und
- Fig. 4: eine Schnittdarstellung einer Ausführungsform der erfindungsgemäßen Schaltvorrichtung.

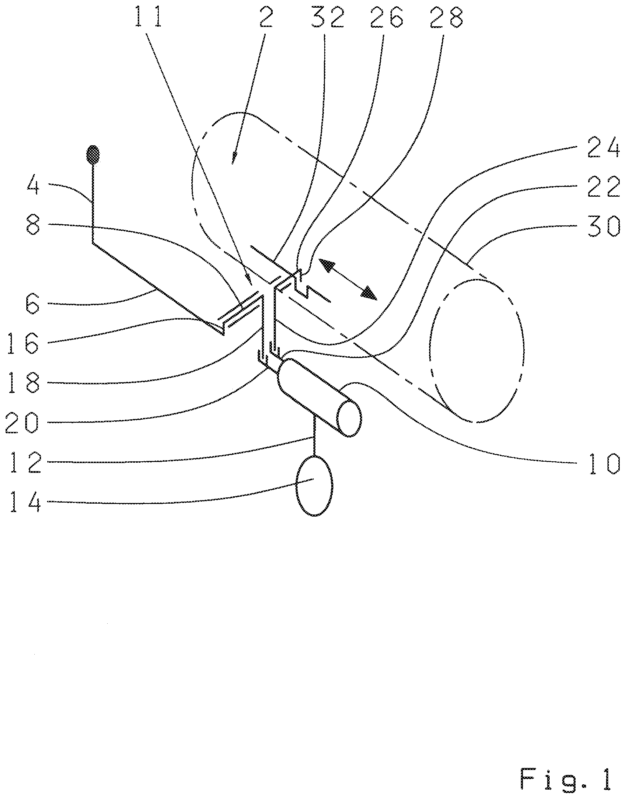

Die Fig. 1 zeigt in einer Skizze eine Schaltanlage 2 eines Kraftfahrzeuges nach dem Stand der Technik, Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

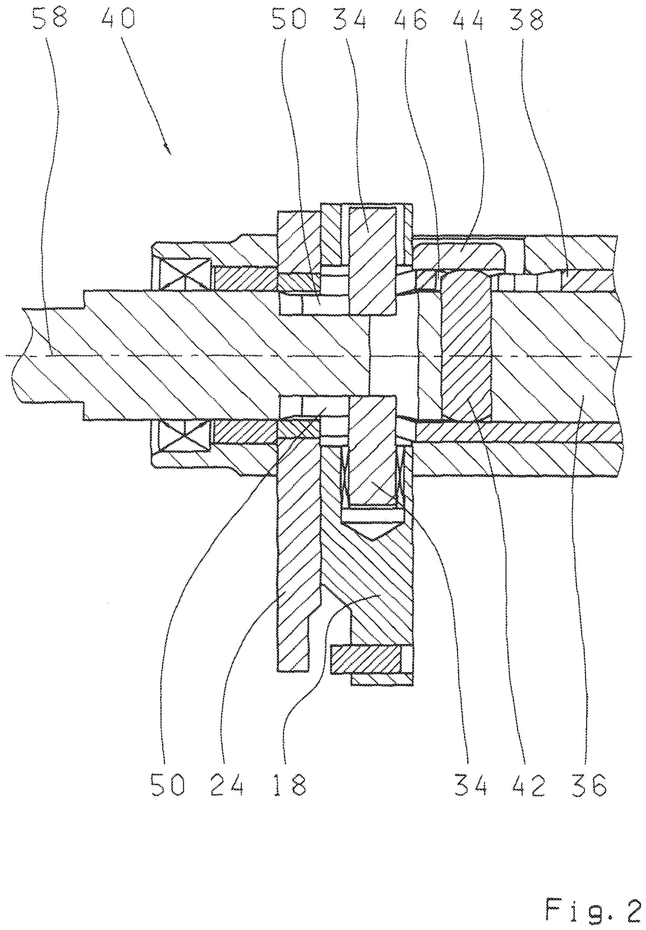

Die Fig. 2 zeigt die erfinderische Schaltvorrichtung 40 in einer Schnittdarstellung. Die Schaltvorrichtung 40 umfasst eine zentrale Schaltwelle 36, welche innerhalb einer Hohlwelle 38 um ihre Achse 58 drehbar gelagert ist. Die Schaltwelle 36 weist an ihrem Umfang in Längsrichtung, also entlang der Achse 58, Längsnuten 50 auf, in die Stifte 34 zur Übertragung der Handschaltkraft eingreifen, die ihrerseits in einem Hebel 18 angeordnet, vorzugsweise in Nadelbüchsen drehbar gelagert sind. Hierbei sind die Stifte 34 derart in den Nuten 50 angeordnet, dass eine axiale Verschiebung der Schaltwelle 36, also die Wählbewegung, ermöglicht wird, wobei ein Verdrehen der Schaltwelle 36 um die Achse 58 zu einem Verschwenken des Hebels 18 führt, was zu einer Aktivierung der Servounterstützungseinrichtung 10 führt, da der Hebel 18 in die hier nicht dargestellte Steuerstange 20 der Servounterstützungseinrichtung 10 eingreift (siehe Fig. 1). Die von der Servounterstützungseinrichtung 10 erzeugte Servounterstützungskraft wird von der hier nicht gezeigten Kolbenstange 22 auf den Hebel 24 übertragen (siehe Fig. 1). Der Hebel 24 ist drehfest mit der Hohlwelle 38 verbunden, wodurch die von der Servounterstützungseinrichtung 10 erzeugte Servounterstützungskraft über den Hebel 24 auf die Hohlwelle 38 übertragen wird. Die Hohlwelle 38 ist in der Schaltvorrichtung axial fest angeordnet und mit der Schaltwelle 36 zum Schalten der Schaltschienen 32 verdrehbar angeordnet.

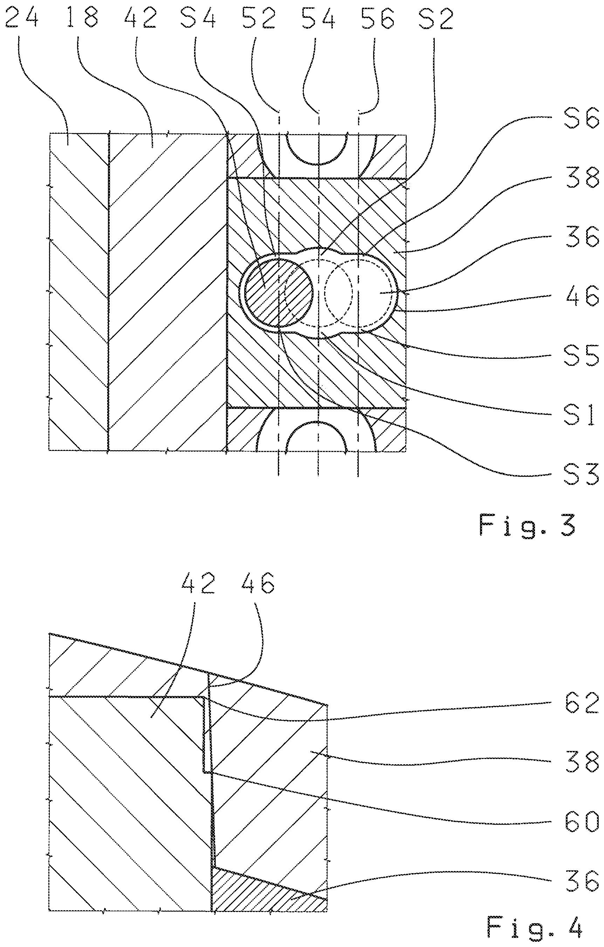

Gemäß der Erfindung weist die Schaltvorrichtung 40 eine Vorrichtung zur Begrenzung der Servounterstützungskraft auf, welche unmittelbar neben der Übertragungsstelle zur Übertragung der Handschaltkraft auf die Servounterstützungseinrichtung 10 angeordnet ist, also unmittelbar neben dem Hebel 18 in dem die Stifte 34 angeordnet sind, welche in die Nuten 50 der Schaltwelle 36 eingreifen. Die Vorrichtung zur Begrenzung der Servounterstützungskraft umfasst einen in der Schaltwelle 36 angeordneten Stift 42, der hier in eine Nut 46 der Hohlwelle 38 eingreift. Die Nut 46 in der Hohlwelle 38 ist hierbei derart ausgebildet, dass zwischen der Nut 46 und dem Stift 42 und somit zwischen der Hohlwelle 38 und der Schaltwelle 36 entsprechende Verdrehspiele vorherrschen. Durch eine entsprechende Ausgestaltung der Nut 46 (siehe Fig. 3) kann für jede Gasse bzw. jede Gangstufe die Servounterstützungskraft entsprechend begrenzt werden. Der in der Schaltwelle 36 angeordnete Stift 42 zur Begrenzung der Servounterstützungskraft ist symmetrisch zu der Nut 50 in der Schaltwelle 36 und somit symmetrisch zu den Stiften 34 zur Übertragung der Handschaltkraft auf die Servounterstützungseinrichtung 10 angeordnet. Eine axiale Sicherung des Stiftes 42 entlang seiner Längsachse ist hier durch das Schaltgehäuse 44 realisiert.

Die Schaltwelle 36 kann drehbar betätigt werden zur Übertragung der Handschaltkraft auf den auslösenden Hebel 18 der Servounterstützungseinrichtung 10 und zur Übertragung der Handschaltkraft auf die Schaltschienen 32 des Getriebes 30. Weiterhin kann die Schaltwelle 36 axial betätigt werden zur Auswahl der zu schaltenden Schaltschiene 32, also für die Wählbewegung.

Die Fig. 3 zeigt die Schaltwelle 36, die Hohlwelle 38, welche die Schaltwelle 36 umgibt, die Nut 46 in der Hohlwelle 38, den Stift 42, der in die Nut 46 eingreift und in der Schaltwelle 36 angeordnet ist, den Hebel 24, der drehfest mit der Hohlwelle 38 verbunden ist und den Hebel 18, der über Stifte 34 (siehe Fig. 2) mit der Schaltwelle 36 in Verbindung steht. Der Stift 42 ist in der Nut 46 in drei verschiedenen Positionen angedeutet, er ist aber in der Nut 46 lediglich einmal vorhanden. Die in der Fig. 3 linke Position stellt die Stellung des Stiftes 42 in der Gasse 52 für die Gangstufe 3/4 eines Fahrzeuggetriebes dar. Die mittlere Position stellt die Stellung des Stiftes 42 in der Gasse 54 für die Gangstufe 1/2 dar, während die rechte Position die Stellung des Stiftes 42 in der Gasse 56 für den R-Gang und/oder Crawler-Gang darstellt. Die Nut 46 in der Hohlwelle 38 ist derart ausgebildet, dass unterschiedliche Verdrehspiele s1 - s6 zwischen dem Stift 42 und der Hohlwelle 38 vorherrschen. Die hier dargestellte Nut 46 ist derart ausgebildet, dass in der Gasse 54 ein größeres Verdrehspiel s1, s2 vorherrscht, als in der Gasse 52 (Verdrehspiel s3, s4). Die Servounterstützungskraft wird solange erzeugt, bis das Verdrehspiel s1 - s6 zwischen dem Stift 42 und der Hohlwelle 38 und somit zwischen der Schaltwelle 36 und der Hohlwelle 38 aufgehoben ist. Ist das Verdrehspiel s1 - s6 aufgehoben, dann wird die Handschaltkraft direkt auf die Hohlwelle 38 übertragen und die Steuerstange 20 der Servounterstützungseinrichtung 10 macht relativ zur Kolbenstange 22 der Servounterstützungseinrichtung 10 keinen Weg mehr. Dadurch, dass die Verdrehspiele s1 - s6 bei kleineren Gangstufen größer ausgebildet sind als bei größeren Gangstufen, kann für die kleineren Gangstufen eine größere Servounterstützungskraft zu Verfügung gestellt werden, als für die größeren Gangstufen. Auch für den R-Gang und/oder Crawler-Gang kann die Servounterstützungskraft durch die Verdrehspiele s5, s6 entsprechend begrenzt werden.

Die Fig. 4 zeigt den Stift 42, welcher in der Schaltwelle 36 angeordnet ist und in die Nut 46 der Hohlwelle 38 eingreift. Der Stift 42 ist hier in abgesetzter Form ausgeführt, wodurch zwei Anlagepunkte 60, 62 zwischen dem Stift 42 und der Hohlwelle 38 entstehen. Bei einer Verdrehung des Stiftes 42 durch die Schaltwelle 36 kommt dieser zuerst mit dem Anlagepunkt 60 mit der Hohlwelle 38 in Kontakt. Tritt am Anlagepunkt 60 beispielsweise ein Verschleiß auf, so kommt bei einer Verdrehung des Stiftes 42 nun auch der Anlagepunkt 62 mit der Hohlwelle 38 in Kontakt. Durch die in der Fig. 4 dargestellte Ausführungsform kann eine optimierte Flächenpressung zwischen Stift 42 und Hohlwelle 38 realisiert werden.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Element, Steuerstange
- 22: Kolbenstange
- 24: Hebel
- 26: Schaltwelle
- 28: Hebel
- 30: Fahrzeuggetriebe
- 32: Schaltschiene
- 34: Stift
- 36: Schaltwelle
- 38: Hohlwelle
- 40: Schaltvorrichtung
- 42: Stift
- 44: Schaltgehäuse
- 46: Nut in der Hohlwelle
- 50: Nut in der Schaltwelle
- 52: Gasse Gangstufe 3/4
- 54: Gasse Gangstufe 1/2
- 56: Gasse R-Gang und/oder Crawler-Gang
- 58: Achse
- 60: Anlagepunkt
- 62: Anlagepunkt

## Patentansprüche

1. Schaltvorrichtung (11, 40) mit Servounterstützungseinrichtung (10) für ein Getriebe (30) eines Fahrzeuges, mit einem Schaltgehäuse (44), mit Mittel zum Wählen und Schalten einer Gangstufe des Getriebes (30), mit einer Übertragungsstelle zur Übertragung der Handschaltkraft auf die Servounterstützungseinrichtung (10) und mit Mittel, um die auf die Servounterstützungseinrichtung (10) einwirkende Handschaltkraft zu verändern und/oder zu begrenzen, wobei die Übertragungsstelle der Handschaltkraft einen Hebel (18) aufweist, der mit einem Element (20) der Servounterstützungseinrichtung (10) verbunden ist, **dadurch gekennzeichnet, dass** die Schaltvorrichtung (11, 40) eine Vorrichtung zur Begrenzung der Servounterstützungskraft aufweist, welche unmittelbar neben dem Hebel (18) der Übertragungsstelle zur Übertragung der Handschaltkraft auf die Servounterstützungseinrichtung (10) angeordnet ist und einen in der Schaltwelle (36) angeordneten Stift (42) umfasst, der in mindestens eine Nut (46) einer die Schaltwelle (36) umgebenden Hohlwelle (38) eingreift, und die Nut (46) in der Hohlwelle (38) derart ausgebildet ist, dass unterschiedliche Verdrehspiele (s1 - s6) zwischen dem Stift (42) und der Hohlwelle (38) vorherrschen.

2. Schaltvorrichtung (11, 40) mit Servounterstützungseinrichtung (10) nach Anspruch 1, **dadurch gekennzeichnet, dass** die Verdrehspiele (s1 - s6) bei kleineren Gangstufen größer ausgebildet sind als bei größeren Gangstufen, wodurch für die kleineren Gangstufen eine größere Servounterstützungskraft zu Verfügung gestellt wird, als für die größeren Gangstufen.

3. Schaltvorrichtung (11, 40) mit Servounterstützungseinrichtung (10) nach wenigstens einem der vorangegangenen Ansprüche, **dadurch gekennzeichnet, dass** die Hohlwelle (38) im Bereich des Stiftes (42) eine zweite Nut aufweist, die der Nut (46) in der Hohlwelle (38) um 180 Grad versetzt angeordnet ist und der Stift (42) derart ausgebildet und in der Schaltwelle (36) angeordnet ist, dass er sowohl in die Nut (46) als auch in die zweite Nut der Hohlwelle (38) eingreift.

4. Schaltvorrichtung (11, 40) mit Servounterstützungseinrichtung (10) nach wenigstens einem der vorangegangenen Ansprüche, **dadurch gekennzeichnet, dass** die Kontaktflächen von Stift (42) und Hohlwelle (38) derart ausgebildet sind, dass bei einem Kontakt eine optimierte Flächenpressung erzielbar ist.

5. Schaltvorrichtung (11, 40) mit Servounterstützungseinrichtung (10) nach Anspruch 4, **dadurch gekennzeichnet, dass** die Kontaktflächen von Stift (42) und Hohlwelle (38) konisch zueinander ausgebildet sind.

6. Schaltvorrichtung (11, 40) mit Servounterstützungseinrichtung (10) nach Anspruch 4, **dadurch gekennzeichnet, dass** der Stift (42) im Bereich der Hohlwelle (38) als abgesetzter Stift ausgebildet ist, wodurch zwei Anlagepunkte (60, 62) zwischen Stift (42) und Hohlwelle (38) entstehen.

7. Schaltvorrichtung (11, 40) mit Servounterstützungseinrichtung (10) nach wenigstens einem der vorangegangenen Ansprüche, **dadurch gekennzeichnet, dass** eine axiale Sicherung des Stiftes (42) entlang seiner Längsachse durch das Schaltgehäuse (44) realisierbar ist.

8. Schaltvorrichtung (11, 40) mit Servounterstützungseinrichtung (10) nach wenigstens einem der Ansprüche 1 bis 6, **dadurch gekennzeichnet, dass** eine axiale Sicherung des Stiftes (42) entlang seiner Längsachse durch wenigstens einen Sicherungsring und/oder einen Bund am Stift (42) realisierbar ist.

9. Schaltvorrichtung (11, 40) mit Servounterstützungseinrichtung (10) nach wenigstens einem der vorangegangenen Ansprüche, **dadurch gekennzeichnet, dass** das Element (20) als Steuerstange der Servounterstützungseinrichtung (10) ausgebildet ist.

## Claims

1. Shifting apparatus (11, 40) having a power assistance device (10) for a gearbox (30) of a vehicle, having a shift housing (44), having means for selecting and shifting a gear stage of the gearbox (30), having a transmission point for transmitting the manual shift force to the power assistance device (10) and having means for varying and/or limiting the manual shift force acting on the power assistance device (10), with the transmission point of the manual shift force having a lever (18) which is connected to an element (20) of the power assistance device (10), **characterized in that** the shifting apparatus (11, 40) has an apparatus for limiting the power assistance force, which apparatus is arranged directly adjacent to the lever (18) of the transmission point for transmitting the manual shift force to the power assistance device (10) and comprises a pin (42) which is arranged in the shift shaft (36), which pin (42) engages into at least one groove (46) of a hollow shaft (38) which surrounds the shift shaft (36), and the groove (46) in the hollow shaft (38) is designed such that different rotational plays (s1 - s6) prevail between the pin (42) and the hollow shaft (38).

2. Shifting apparatus (11, 40) having a power assistance device (10) according to Claim 1, **characterized in that** the rotational plays (s1 - s6) are greater for relatively low gear stages than for relatively high gear stages, as a result of which a greater power assistance force is provided for the relatively low gear stages than for the relatively high gear stages.

3. Shifting apparatus (11, 40) having a power assistance device (10) according to at least one of the preceding claims, **characterized in that** the hollow shaft (38) has, in the region of the pin (42), a second groove which is arranged offset by 180 degrees with respect to the groove (46) in the hollow shaft (38), and the pin (42) is designed, and arranged in the shift shaft (36), in such a way as to engage both into the groove (46) and also into the second groove of the hollow shaft (38).

4. Shifting apparatus (11, 40) having a power assistance device (10) according to one of the preceding claims, **characterized in that** the contact surfaces of the pin (42) and hollow shaft (38) are designed such that optimum surface pressure can be obtained in the event of contact.

5. Shifting apparatus (11, 40) having a power assistance device (10) according to Claim 4, **characterized in that** the contact surfaces of the pin (42) and hollow shaft (38) are of conical design with respect to one another.

6. Shifting apparatus (11, 40) having a power assistance device (10) according to Claim 4, **characterized in that** the pin (42) is designed, in the region of the hollow shaft (38), as a stepped pin, as a result of which two contact points (60, 62) are generated between the pin (42) and hollow shaft (38).

7. Shifting apparatus (11, 40) having a power assistance device (10) according to at least one of the preceding claims, **characterized in that** it is possible for the pin (42) to be axially secured along its longitudinal axis by means of the shift housing (44).

8. Shifting apparatus (11, 40) having a power assistance device (10) according to at least one of Claims 1 to 6, **characterized in that** it is possible for the pin (42) to be axially secured along its longitudinal axis by means of at least one locking ring and/or a collar on the pin (42).

9. Shifting apparatus (11, 40) having a power assistance device (10) according to at least one of the preceding claims, **characterized in that** the element (20) is designed as a control rod of the power assistance device (10).

## Revendications

1. Dispositif de changement de vitesse (11, 40) à système de servo-assistance (10) pour une boîte de vitesses (30) d'un véhicule, avec un carter de changement de vitesse (44), avec des moyens de sélection et de changement d'étage de transmission de la boîte de vitesses (30), avec un point de transmission pour la transmission de la force de changement de vitesse de la main au système de servo-assistance (10) et avec des moyens pour changer et/ou limiter la force de changement de vitesse de la main agissant sur le système de servo-assistance (10), le point de transmission de la force de changement de vitesse de la main comportant un levier (18) relié à un élément (20) du système de servo-assistance (10), **caractérisé en ce que** le dispositif de changement de vitesse (11, 40) comporte un dispositif de limitation de la force de servo-assistance disposé directement à côté du levier (18) du point de transmission pour transmettre la force de changement de vitesse de la main au système de servo-assistance (10) et qu'il comprend une tige (42) disposée dans l'arbre de changement de vitesse (36) s'engrenant dans au moins une rainure (46) d'un arbre creux (38) entourant l'arbre de changement de vitesse (36) et la rainure (46) étant réalisée de telle sorte dans l'arbre creux (38) que différents jeux de torsion (s1 - s6) sont possibles entre la tige (42) et l'arbre creux (38).

2. Dispositif de changement de vitesse (11, 40) à système de servo-assistance (10) selon la revendication 1, **caractérisé en ce que** les jeux de torsion (s1 - s6) sont réalisés de façon à être plus importants pour les plus petits étages de transmission que pour les plus grands étages de transmission, mettant à disposition une force de servo-assistance plus grande pour les plus petits étages de transmission que pour les plus grands étages de transmission.

3. Dispositif de changement de vitesse (11, 40) à système de servo-assistance (10) selon au moins l'une quelconque des revendications précédentes, **caractérisé en ce que** l'arbre creux (38) comporte, dans la région de la tige (42), une deuxième rainure disposée de façon décalée de 180 degrés par rapport à la rainure (46) dans l'arbre creux (38) et la tige (42) étant réalisée et disposée de telle sorte dans l'arbre de changement de vitesse (36) qu'elle s'engrène tant dans la rainure (46) que dans la deuxième rainure de l'arbre creux (38) .

4. Dispositif de changement de vitesse (11, 40) à système de servo-assistance (10) selon au moins l'une quelconque des revendications précédentes, **caractérisé en ce que** les surfaces de contact de la tige (42) et de l'arbre creux (38) sont réalisées de telle sorte qu'une pression superficielle optimisée peut être obtenue en cas de contact.

5. Dispositif de changement de vitesse (11, 40) à système de servo-assistance (10) selon la revendication 4, **caractérisé en ce que** les surfaces de contact de la tige (42) et de l'arbre creux (38) sont réalisées de façon conique l'une par rapport à l'autre.

6. Dispositif de changement de vitesse (11, 40) à système de servo-assistance (10) selon la revendication 4, **caractérisé en ce que** la tige (42) située dans la région de l'arbre creux (38) est réalisée sous la forme d'une tige décalée, provoquant la création de deux points d'appui (60,62) entre la tige (42) et l'arbre creux (38).

7. Dispositif de changement de vitesse (11, 40) à système de servo-assistance (10) selon au moins l'une quelconque des revendications précédentes, **caractérisé en ce qu'**une fixation axiale de la tige (42) peut être réalisée le long de son axe longitudinal par le carter de changement de vitesse (44).

8. Dispositif de changement de vitesse (11, 40) à système de servo-assistance (10) selon au moins l'une quelconque des revendications 1 à 6, **caractérisé en ce qu'**une fixation axiale de la tige (42) le long de son axe longitudinal peut être réalisée par au moins une bague de fixation et/ou un lien prévu au niveau de la tige (42).

9. Dispositif de changement de vitesse (11, 40) à système de servo-assistance (10) selon au moins l'une quelconque des revendications précédentes, **caractérisé en ce que** l'élément (20) est réalisé sous la forme d'une tige de commande du système de servo-assistance (10) .
